# EUROPÄISCHE PATENTSCHRIFT

(11) **EP 0 595 198 B1**
(45) Veröffentlichungstag und Bekanntmachung des Hinweises auf die Patenterteilung: **04.09.1996**
(21) Anmeldenummer: 93117062.5
(22) Anmeldetag: 21.10.1993
(51) Int. Cl.: B29C 47/70

(54) **Vorrichtung und Verfahren zur Herstellung von langgestreckten Profilkörpern aus Kunststoff**
Apparatus and method for manufacturing elongated plastic profiles
Appareil et méthode pour la fabrication de profilés allongés en matières plastiques

(30) Priorität: 29.10.1992 DE 4236541
(43) Veröffentlichungstag der Anmeldung: 04.05.1994
(73) Patentinhaber: FRIEDRICH THEYSOHN GmbH, D-30853 Langenhagen (DE)
(72) Erfinder: Topf, Siegfried, A-4050 Traun (AT); Gstöttenmayr, Stefan, A-4552 Wartberg (AT)
(74) Vertreter: Döring, Roger, Dipl.-Ing.

(56) Entgegenhaltungen:
- BE-A- 703 752
- GB-A- 2 217 252
- PATENT ABSTRACTS OF JAPAN vol. 9, no. 114 (M-380)(1837) 18. Mai 1985 & JP-A-60 000 926 (SHINKOUBE DENKI K.K.)

## Beschreibung

Die Erfindung betrifft eine Vorrichtung gemäß dem Oberbegriff des Anspruchs 1.

Es sind andere Vorrichtungen auf dem Markt erhältlich, die zur Herstellung unterschiedlichster "Profilkörper" bzw. Stränge eingesetzt werden. Solche Profilkörper können massiv oder beispielsweise als Fensterprofile auch hohl sein. Es kann sich auch um den äußeren Mantel von Kabeln oder Rohren handeln. In allen Fällen wird zu verarbeitender Kunststoff in der Plastifiziereinheit - im folgenden kurz "Extruder" genannt - plastifiziert und von der sich drehenden Schnecke durch die Austrittsöffnung gedrückt. Unabhängig von optimalen Eigenschaften der Extruder beim Plastifizieren des Kunststoffs und bei dessen Führung im Extruder sind der Geschwindigkeit, mit der Profilkörper hergestellt werden können, durch die Abkühlgeschwindigkeit Grenzen gesetzt. Bei einer vorgegebenen maximalen Länge einer Extrusionsvorrichtung kann wegen der schlechten Wärmeleitfähigkeit des Kunststoffs nur bis zu einer bestimmten Geschwindigkeit extrudiert werden, da die extrudierten Profilkörper am Ende der Extrusionsvorrichtung so weit abgekühlt sein müssen, daß sie sich nicht mehr verformen. Es stehen zwar Extruder mit höheren Plastifizierleistungen zur Verfügung, sie kommen aus den geschilderten Gründen aber nicht zum Einsatz. In bisheriger Technik werden daher für einen erhöhten Ausstoß an Profilkörpern zwei oder mehr Extruder eingesetzt.

Der Oberbegriff des Anspruchs 1 basiert auf BE-A-703 752. Der Erfindung liegt die Aufgabe zugrunde, die Vorrichtung weiterzubilden.

Diese Aufgabe wird gemäß dem Anspruch 1 gelöst.

Der von der Schnecke des Extruders geförderte Materialstrom wird durch den Aufteiler in mindestens zwei getrennte Teilströme aufgeteilt, von denen jeweils einer zu einer der Ausformdüsen geführt wird. Dabei können aus den unterschiedlichen Ausformdüsen identische aber auch unterschiedlich gestaltete Profilkörper austreten.

Durch die Aufteilung des von der Schnecke des Extruders geförderten Materialstroms in mindestens zwei Teilströme können sich beispielsweise durch Materialveränderungen Probleme ergeben, die zu einer Beeinflussung der Qualität der erzeugten Profilkörper führen können. Derartige Veränderungen können durch den zwischen dem Ende der Schnecke und dem Aufteiler des Extruders angeordneten drehbaren Adapter schnell und auf einfache Weise ausgeglichen werden. Durch eine Drehung des Adapters wird der von der Schnecke kommende Materialstrom verändert, der durch die mittels des Verdrängungskörpers erzeugten, asymmetrisch angeordneten Durchtrittsöffnungen des Adapters hindurchtritt. Die Strömungsverhältnisse in den zu den Ausformdüsen führenden Teilströmen werden durch die Drehung des Adapters schnell verändert, bis die Qualität der erzeugten Profilkörper wieder den Anforderungen entspricht. Dazu kann der Adapter von Hand aber auch automatisch verstellt werden.

Zur automatischen Verstellung des Adapters kann ein Regler verwendet werden, dem als Sollwerte die in den einzelnen Teilströmen vorzugebenden Drücke aufgegeben werden. Die Drücke können zur Ermittlung der Istwerte mittels Druckaufnehmern gemessen werden. Statt der Drücke können dem Regler auch die Abmessungen der Profilkörper aufgegeben werden, zu denen beispielsweise die Wandstärke von hohlen Profilkörpern gehört.

Ein Ausführungsbeispiel des Erfindungsgegenstandes ist in den Zeichnungen dargestellt.

Es zeigen:
Fig. 1 in schematischer Darstellung eine Vorrichtung nach der Erfindung.
Fig. 2 einen Ausschnitt der Vorrichtung in vergrößerter Darstellung.
Fig. 3 eine Ansicht von Fig. 2 in Richtung des Pfeiles A.
Fig. 4 einen Schnitt durch Fig. 2 längs der Linie IV - IV.
Fig. 5 und 6 Schnitte durch Fig. 2 längs der Linie V - V mit zwei unterschiedlichen Stellungen des Adapters.

In der folgenden Beschreibung wird die Erfindung am Beispiel eines Doppelschneckenextruders mit zwei Ausformdüsen erläutert. Es könnte auch ein Extruder mit nur einer Schnecke oder mit mehr als zwei Schnecken eingesetzt werden. Ebenso könnten auch mehr als zwei Ausformdüsen vorhanden sein.

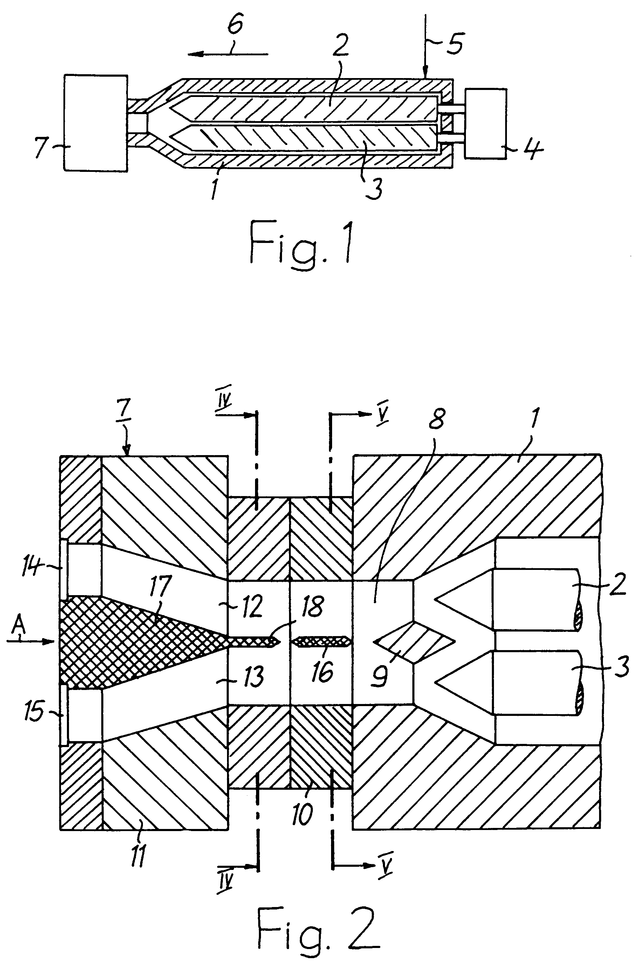

Der in Fig. 1 dargestellte Extruder hat ein Schneckengehäuse 1, in dem zwei Schnecken 2 und 3 nebeneinander angeordnet sind. Die Schnecken 2 und 3 bestehen aus einem langgestreckten Grundkörper und einem nach außen abstehenden, schraubenlinienförmig verlaufenden Steg. Die Stege der Schnecken 2 und 3 sind in Fig. 1 durch schräge Linien angedeutet. Die Schnecken 2 und 3 kämmen miteinander. Beim Betrieb des Extruders werden die Schnecken 2 und 3 von einer Antriebseinheit 4 um ihre Achsen gedreht. In Richtung des Pfeiles 5 in den Extruder eingefüllter Kunststoff wird dadurch in Richtung des Pfeiles 6 zu einem Werkzeug 7 bewegt. Aus dem Werkzeug 7 treten kontinuierlich Profilkörper aus.

Der von den Schnecken 2 und 3 geförderte Kunststoff tritt in einen verengten Fließkanal 8 ein, in dem zur Vergleichmäßigung der Materialströmung eine Insel 9 angeordnet sein kann. In Bewegungsrichtung des Kunststoffs folgen ein ringförmiger Adapter 10 und ein Aufteiler 11, durch welchen der Fließkanal 8 in zwei Kanäle 12 und 13 aufgeteilt wird. Die Kanäle 12 und 13 enden in Ausformdüsen 14 und 15, aus denen bei Betrieb des Extruders zwei Profilkörper austreten.

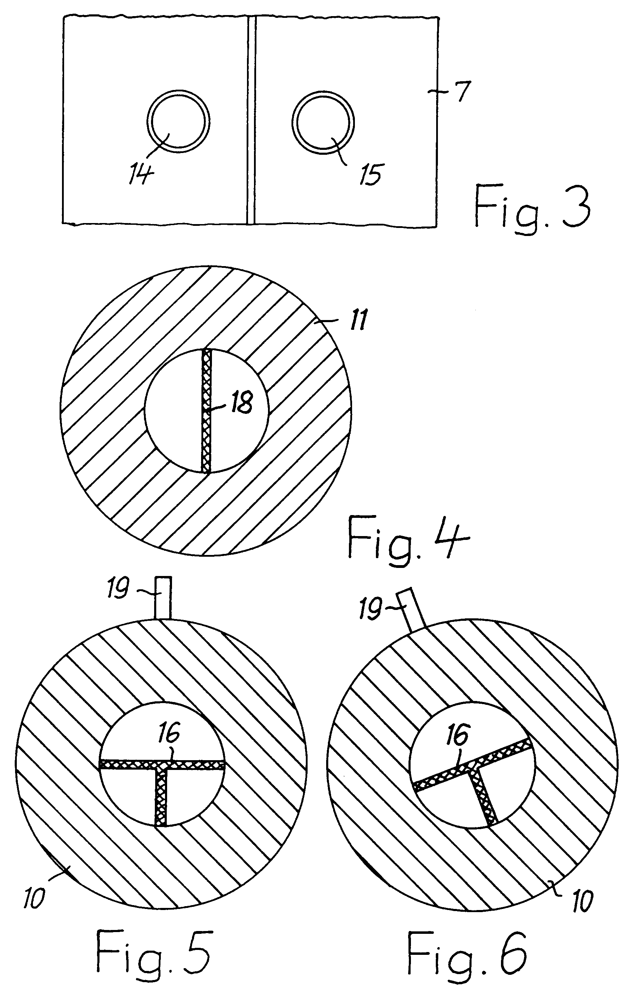

Der Adapter 10 ist um seine Achse drehbar im Schneckengehäuse 1 angeordnet. Seine Achse stimmt mit der Mittelachse des Schneckengehäuses 1 überein. Er hat in seiner Bohrung einen Verdrängungskörper 16, welcher die Bohrung gemäß Fig. 5 und 6 in mehrere Durchgangslöcher aufteilt. Der Verdrängungskörper 16 ist auf jeden Fall so ausgebildet, daß der lichte Querschnitt des Adapters 10 asymmetrisch aufgeteilt wird. Er ist gemäß Fig. 5 und 6 T-förmig ausgebildet, kann aber auch eine andere geometrische Form haben.

Der Aufteiler 11 hat in seiner Mitte einen Kern 17 mit einer Spitze 18, die in Richtung der Schnecken 2 und 3 weist und zentral im Fließkanal 8 liegt. Die Spitze 18 des Kerns 17 ist möglichst nahe bis an den Verdrängungskörper 16 des Adapters 10 herangeführt. Spitze 18 und Verdrängungskörper 16 bleiben aber durch einen Spalt getrennt, so wie es in Fig. 2 dargestellt ist.

Der Adapter 10 kann von Hand um seine Achse gedreht werden. Dazu kann an demselben ein Hebel 19 angebracht sein. Da der Verdrängungskörper 16 fest im Adapter 10 angebracht ist, wird er bei dessen Drehung desselben mitgedreht. Aus den Fig. 5 und 6 gehen zwei unterschiedliche Positionen des Verdrängungskörpers 16 hervor.

Der Adapter 10 kann aber auch automatisch verstellt werden. Dazu kann ein Regler verwendet werden, dem als Sollwerte die Drücke aufgegeben werden, die in den Kanälen 12 und 13 herrschen müssen. Als Istwerte werden diese Drücke mit entsprechenden Druckaufnehmern während des Betriebs des Extruders gemessen. Statt der Drücke könnten auch die Abmessungen der extrudierten Profilkörper zum Regeln der Stellung des Adapters 10 verwendet werden. Bei hohlen Profilkörpern ist deren Wanddicke dafür eine verwendbare Größe.

Bei Inbetriebnahme des Extruders hat der Adapter 10 beispielsweise die aus Fig. 5 ersichtliche Position. Solange Qualität und Abmessungen der aus den Ausformdüsen 14 und 15 austretenden Profilkörper den Anforderungen genügen, bleibt diese Position erhalten. Bei Veränderungen, die beispielsweise durch Veränderungen des geförderten Materials hervorgerufen werden, wird der Adapter 10 solange um seine Achse gedreht, bis die Veränderungen ausgeglichen sind. Eine derartige, neue Position des Adapters 10 geht beispielsweise aus Fig. 6 hervor. Da der Verdrängungskörper 16 des Adapters 10 den hindurchtretenden Materialstrom asymmetrisch aufteilt, werden durch die Drehung des Adapters 10 die in die Kanäle 12 und 13 eintretenden Teilströme unterschiedlich beeinflußt.

Statt nur eines Adapters 10 können auch zwei oder mehr derartige Adapter mit einem eine asymmetrische Aufteilung bewirkenden Verdrängungskörper 16 axial hintereinander eingesetzt werden. Das bietet sich besonders dann an, wenn mehr als zwei Ausformdüsen 14 und 15 vorhanden sind. Zwischen je zwei derartigen Adaptern wäre gegebenenfalls ein weiterer Aufteiler anzuordnen.

## Patentansprüche

1. Vorrichtung zur Herstellung von langgestreckten Profilkörpern aus Kunststoff, bestehend aus einer Plastifiziereinheit mit einem Schneckengehäuse, in dem mindestens eine Schnecke um ihre Achse drehbar gelagert ist und das im Bereich des einen Endes der Schnecke eine Einfüllöffnung zum Einfüllen von Kunststoff und im Bereich des anderen Endes der Schnecke eine Austrittsöffnung für die Profilkörper aufweist, bei welcher
die Austrittsöffnung aus mindestens zwei separat angeströmten Ausformdüsen (14,15) besteht und bei
welcher zwischen dem Ende der Schnecke (2,3) und den Ausformdüsen (14,15) ein Aufteiler (11) zum Aufteilen des von der Schnecke (2,3) geförderten Materialstroms auf die beiden Ausformdüsen (14,15) angeordnet ist, dadurch gekennzeichnet,
daß zwischen dem Ende der Schnecke (2,3) und dem Aufteiler (11) mindestens ein ringförmiger, um seine der Mittelachse des Schneckengehäuses (1) entsprechende Achse drehbarer Adapter (10) angebracht ist, in dem ein fest mit demselben verbundener, seinen lichten Querschnitt asymmetrisch aufteilender, Durchtrittsöffnungen freilassender Verdrängungskörper (16) angeordnet ist.

2. Vorrichtung nach Anspruch 1, dadurch gekennzeichnet, daß der Verdrängungskörper (16) T-förmig ausgebildet ist.

3. Vorrichtung nach Anspruch 1 oder 2, dadurch gekennzeichnet, daß in den durch den Aufteiler (11) getrennten, zu den Ausformdüsen (14,15) führenden Kanälen (12,13) Druckaufnehmer angeordnet sind.

4. Verfahren zur Herstellung von langgestreckten Profilkörpern mit einer Vorrichtung nach einem der Ansprüche 1 bis 3, dadurch gekennzeichnet, daß der Adapter (10) automatisch nach Maßgabe einer Regelgröße verstellt wird, die vom Vergleich vorgegebener Sollwerte mit vom Material der erzeugten Profilkörper abhängigen Istwerten abgeleitet wird.

5. Verfahren nach Anspruch 4, dadurch gekennzeichnet, daß als Soll- und Istwerte die in den zu den Ausformdüsen (14,15) führenden Kanälen (12,13) bestehenden Drücke verwendet werden.

6. Verfahren nach Anspruch 4, dadurch gekennzeichnet, daß als Soll- und Istwerte die Abmessungen der aus den Ausformdüsen (14,15) austretenden Profilkörper verwendet werden.

## Claims

1. An apparatus for producing elongated shaped articles of plastic, said apparatus comprising a plastifier having a elongated housing with a housing axis and at least one plastifying worm rotatable in said housing, said housing having an inlet for plastic material to be plastified at one end, and an outlet lying along said axis at an opposite end of said housing discharging plastified plastic, in which
apparatus said outlet is formed with at least two shaping orifices (14,15) and in which between the end of the said worm (2,3) and the shaping orifices (14,15) a divider (11) is provided subdividing the flow of plastic conveyed by the worm (2,3) to the said shaping orifices (14,15), characterized in that between the end of the said worm (2,3) and the said divider (11) at least one annular adapter (10) rotatable about said axis of said housing (1) is provided, said adapter (10) being provided with a displacement body (16) having passages, which is fixed to the adapter (10) and which subdivides the flow cross section of said adapter (10) asymmetrically.

2. An apparatus according to claim 1, charatarized in that the displacement body (16) is T-shaped.

3. An apparatus according to claim 1 or 2, characterized in that in the passages (12,13) leading to the shaping orifices (14,15) and subdivided by the divider (11) pressure sensors are arranged.

4. A method of producing of elongated shaped articles with a apparatus according to one of the claims 1 to 3, characterized in that the adapter (10) is displaced automatically depending on a standard, which is received by comparing setpoint values with measured values depending on the material of the produced articles.

5. A method according to claim 4, characterized in that the pressure values of the passages (12,13) leading to the shaping orifices (14,15) are used as setpoint values and measured values.

6. A method according to claim 4, characterized in that the dimensions of the articles passing the shaping orifices (14,15) are used as setpoint values and measured values.

## Revendications

1. Dispositif pour la fabrication de corps profilés allongés en matière plastique, se composant d'une unité plastificatrice comprenant un carter de vis sans fin, dans lequel est logée au moins une vis sans fin de manière rotative autour de son axe et qui présente, dans la zone d'une extrémité de la vis sans fin, une ouverture de remplissage pour le remplissage de matière plastique et, dans la zone de l'autre extrémité de la vis sans fin, une ouverture de sortie pour le corps profilé, dispositif pour lequel,
l'ouverture de sortie se compose d'au moins deux buses de moulage (14, 15), alimentée séparément, et pour lequel il est prévu, entre l'extrémité de la vis sans fin (2, 3) et les buses de moulage (14, 15), un répartiteur (11) pour la répartition du courant de matière amenée par la vis sans fin (2, 3) aux deux buses de moulage (14, 15), caractérisé en ce qu'entre l'extrémité de la vis sans fin (2, 3) et le répartiteur (11), est mis en place au moins un adaptateur annulaire (10) qui est rotatif autour de son axe correspondant à l'axe médian du carter de vis sans fin (1) et dans lequel est disposé un corps de refoulement (16) qui libère des ouvertures de passage, dont la section transversale interne est répartie asymétriquement et qui est relié au carter.

2. Dispositif selon la revendication 1, caractérisé en ce que le corps de refoulement (16) présente la forme d'un T.

3. Dispositif selon la revendication 1 ou 2, caractérisé en ce que des absorbeurs de pression sont disposés dans les canaux (12, 13) d'amenée aux buses de moulage (14, 15) et séparés par le répartiteur (11).

4. Procédé pour la fabrication de corps profilés allongés comprenant un dispositif selon l'une des revendications 1 à 3, caractérisé en ce que l'adaptateur (10) est réglé automatiquement en fonction d'une grandeur de réglage donnée qui résulte de la comparaison de valeurs de consignes prédéterminées avec des valeurs réelles qui sont fonction de la matière des corps profilés fabriqués.

5. Procédé selon la revendication 4, caractérisé en ce que les pressions, dominant dans les canaux (12, 13) d'amenée aux buses de moulage (14, 15), servent de valeurs réelles et de consigne.

6. Procédé selon la revendication 4, caractérisé en ce que les dimensions des corps profilés sortant des buses de moulage (14, 15) sont utilisées en tant que valeurs réelles et de consigne.
